**Europäisches Patentamt**

**European Patent Office**

**Office européen des brevets**

(19)

(11) Veröffentlichungsnummer : **0 254 763 B1**

# EUROPÄISCHE PATENTSCHRIFT

(12)

(45) Veröffentlichungstag der Patentschrift :
23.01.91 Patentblatt 91/04

(51) Int. Cl.$^5$ : **H04N 3/233**

(21) Anmeldenummer : 86110576.5

(22) Anmeldetag : 31.07.86

(54) **Digitale Horizontalablenkschaltung.**

(43) Veröffentlichungstag der Anmeldung :
03.02.88 Patentblatt 88/05

(45) Bekanntmachung des Hinweises auf die
Patenterteilung :
23.01.91 Patentblatt 91/04

(84) Benannte Vertragsstaaten :
**DE FR NL**

(56) Entgegenhaltungen :
**PATENT ABSTRACTS OF JAPAN, Band 7, Nr.
222 (E-201)[1367], 4. Oktober 1983 &
JP-A-58-114 577
DATENBUCH DER FIRMA INTERMETALL,
DIGIT 2000 - VLSI Digital TV System, Mai 1984,
Selten 112-114, Freiburg, DE**

(73) Patentinhaber : **Deutsche ITT Industries GmbH
Hans-Bunte-Strasse 19 Postfach 840
D-7800 Freiburg (DE)**

(72) Erfinder : **Mehrgardt, Sönke, Dr.
Häglestrasse 26
D-7801 March (DE)**

## Beschreibung

Die Erfindung betrifft eine digitale Horizontalablenkschaltung in einem von einem Systemtakt getakteten digitalen Fernsehempfänger zur Erzeugung eines dessen Horizontalendstufe ansteuernden analogen Horizontalablenksignals mit den weiteren Merkmalen des Oberbegriffs des Anspruchs 1. Eine derartige digitale Horizontalablenkschaltung ist in dem Datenbuch der Firma Intermetall "DIGIT 2000 VLSI Digital TV System", 1984/5, Seiten 112 bis 114 anhand der integrierten Schaltung DPU 2500 beschrieben.

Die für die digitale Erzeugung des Horizontalablenksignals erforderliche Phasenvariation, die abgestuft in Bruchteilen der Periodendauer des Systemtakts erfolgen muß, wird bei der vorbeschriebenen Anordnung im wesentlichen dadurch erreicht, daß sogenannte "Gate-Delay"-Stufen oder -Ketten verwendet werden, wie sie beispielsweise in den europäischen Patentanmeldungen EP-A 0 059 802, 0 080 970 und 0 116 669 beschrieben sind und bei denen im wesentlichen die inhärente Verzögerungszeit von Invertern ausgenutzt wird. Es hat sich jedoch gezeigt, daß mit diesen Anordnungen nicht alle auftretenden Betriebszustände vollständig beherrscht werden können.

Der in den Ansprüchen angegebenen Erfindung liegt daher die Aufgabe zugrunde, die vorbeschriebene digitale Horizontalablenkschaltung so abzuwandeln und zu verbessern, daß auf die erwähnten Gate-Delay-Stufen verzichtet werden kann.

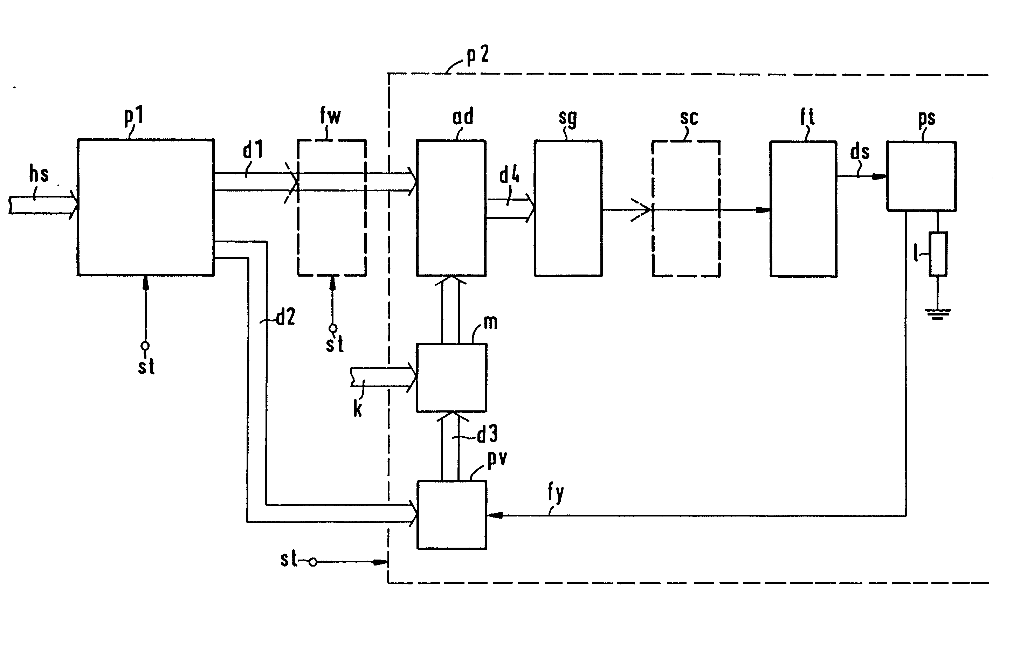

Die Erfindung wird nun anhand der Figur der Zeichnung näher erläutert, die in schematischer Darstellung ein Blockschaltbild eines Ausführungsbeispiels zeigt, und zwar denjenigen Ausschnitt eines digitalen Fernsehempfängers, also eines Fernsehempfängers mit digitaler Signalaufbereitung des über die Antenne empfangenen analogen Antennensignals, welcher für die Erfindung von Interesse ist. Es sind somit alle diejenigen Teilschaltungen weggelassen, die sich mit der Digital-Analog-Wandlung, der Abtrennung der Synchronimpulse, der Chrominanz- und Luminanzsignalverarbeitung oder mit der Tonsignalverarbeitung befassen ; das Gesamtschaltungskonzept von digitalen Fernsehempfängern ist seit längerem bereits geläufig.

Die erste digitale phasenverriegelte Schleife, also die PLL-Schleife p1 erhält das (digitale) vom FBAS-Signal abgetrennte Horizontalsynchronsignal hs sowie den Systemtakt st zugeführt und bildet daraus in vorbeschriebener Weise zum einen das erste Digitalwort d1, das die Zeilenfrequenz repräsentiert, und zum anderen das zweite Digitalwort d2, das die Sollage des Horizontal-Fly-Back-Signals fy repräsentiert. Das Signal fy entstammt der Horizontalendstufe ps des Fernsehempfängers, die die Ablenkspule 1 mit dem erforderlichen Sägezahnstrom speist. Die zeitliche Lage des Fly-Back-Signals fy bezüglich des Horizontalablenksignals ds ist von den Schalteigenschaften der Horizontalendstufe ps abhängig und wird auch vom an der Bildröhre liegenden Videosignal beeinflußt.

Mittels der zweiten PLL-Schleife p2, die in der Figur der Zeichnung durch die gestrichelte Einrahmung angedeutet ist, werden diese Abhängigkeiten in vorbeschriebener Weise ausgeregelt. Im einzelnen erzeugt der Phasenvergleicher pv das die Phasenabweichung des Fly-Back-Signals fy von seiner Sollage repräsentierende dritte Digitalwort d3, und die zweite PLL-Schleife p2 verschiebt das Horizontalablenksignal ds zeitlich so, daß das Fly-Back-Signal fy die Sollage einnimmt.

Das erste Digitalwort d1 ist dem ersten und das dritte Digitalwort d3 über den als Verstärker dienenden Multiplizierer m dem zweiten Eingang des Addierers ad zugeführt. Dem Multiplizierer m ist an seinem zweiten Eingang das den Verstärkungsfaktor der zweiten PLL-Schleife p2 bestimmende Signal k zugeführt, so daß deren Einschwingverhalten vom Hersteller des Fernsehempfängers optimal abgleichbar ist.

Der Ausgang des Addierers ad liegt am Steuereingang des digitalen Sinusgenerators sg, der z.B. als Akkumulator mit nachfolgender Sinustabelle (ROM) ausgebildet sein kann. Diese im Prinzip bekannte Anordnung erzeugt bei einem am Steuereingang anliegenden n-stelligen Digitalwort d4 eine Sinusschwingung der Frequenz $d4 fs/2^n$, wobei fs die Frequenz des Systemtaktes st ist.

Das Ausgangssignal des digitalen Sinusgenerators sg ist dem Frequenzteiler ft zugeführt, an dessen Ausgang das Horizontalablenksignal ds auftritt, das wie üblich ein Rechtecksignal ist. Der Frequenzteiler ft teilt somit nicht nur die Frequenz des Ausgangsignals des Sinusgenerators sg, sondern wandelt auch das Sinussignal in das erwähnte Rechtecksignal um; dies kann beispielsweise schon durch eine entsprechende Sinus-Rechteck-Wandlungsstufe am Eingang des Frequenzteilers ft geschehen.

In der Figur der Zeichnung sind jeweils gestrichelt gezeichnet zwei zusätzliche Stufen angegeben, durch die einzeln oder in Verbindung miteinander die Anordnung erweitert werden kann. So kann zwischen dem Ausgang der ersten PLL-Schleife p1 für das erste Digitalwort d1 und dem entsprechenden Eingang des Addierers ad der Periodendauer-Frequenz-Wandler fw angeordnet werden, der dann erforderlich ist, wenn das von der ersten PLL-Schleife p1 erzeugte erste Digitalwort d1 die Periodendauer des Horizontalablenksignals ds repräsentiert (repräsentiert es dagegen bereits die Frequenz der Horizontalablenksignals, so ist die Stufe fw nicht erforderlich).

Zwischen dem Ausgang des digitalen Sinusgenerators sg und dem Eingang des Frequenzteilers ft kann auch die Sicherheitsschaltung sc eingefügt werden, die bevorzugt eine analoge PLL-Schleife sein kann und die bei Abweichung der Frequenz des Sinusgenerators sg von einem vorgegebenen Sollbereich von sich aus ein Sinussignal mit der Sollfrequenz erzeugt. Dies kann beispielsweise für die Anlaufphase nach dem Einschalten des Fernsehempfängers oder auch zur Sicherheit bei Ausfall einer oder beider PLL-Schleifen p1, p2 von Vorteil sein.

In der Figur der Zeichnung sind mittels der bandförmigen Verbindungsleitungen Signalwege veranschaulicht, auf denen gewöhnlich Digitalsignale in paralleler Form übertragen werden, d.h. auf diesen Bussen folgen die einzelnen (parallelen) Digitalwörter im Takt des Systemtakt st aufeinander. Daß auch die einzelnen Stufen der zweiten PLL-Schleife p2, wo es erforderlich und sinnvoll ist, sowie der Periodendauer-Frequenz-Wandler fw vom Systemtakt st getaktet sind, ist durch die entsprechende jeweilige Eingangsleitung angedeutet.

Die erfindungsgemäße digitale Horizontalablenkschaltung wird bevorzugt monolithisch integriert realisiert, wobei insbesondere die bekannte MOS-Technik herangezogen werden kann. Sie kann Teil einer größeren integrierten Schaltung sein, aber auch als selbständige integrierte Schaltung realisiert werden.

## Ansprüche

1. Digitale Horizontalablenkschaltung in einem von einem Systemtakt (st) getakteten digitalen Fernsehempfänger zur Erzeugung eines dessen Horizontalendstufe (ps) ansteuernden analogen Horizontalablenksignals (ds)
   - mit einer ersten digitalen phasenverriegelten Schleife (= PLL-Schleife) (p1), die das Horizontalablenksignal (ds) mit dem vom FBAS-Signal abgetrennten Horizontalsynchronsignal (hs) synchronisiert und pro Zeile ein die Zeilenfrequenz repräsentierendes erstes Digitalwort (d1) und ein die Sollage des Horizontal-Fly-Back-Signals (fy) repräsentierendes zweites Digitalwort (d2) abgibt, und
   - mit einer zweiten digitalen PLL-Schleife (p2), die mittels eines digitalen Phasenvergleichers (pv) ein die Phasenabweichung des Horizontal-Fly-Back-Signals (fy) von seiner Sollage repräsentierendes drittes Digitalwort (d3) erzeugt und das Horizontalablenksignal (ds) zeitlich so verschiebt, daß das Horizontal-Fly-Back-Signal (fy) die Sollage hat, gekennzeichnet durch folgende Merkmale :
   - das erste Digitalwort (d1) ist dem ersten und das dritte Digitalwort (d3) über einen als Verstärker dienenden Multiplizierer (m) dem zweiten Eingang eines Addierers (ad) zugeführt und
   - der Ausgang des Addierers (ad) liegt am Steuereingang eines digitalen Sinusgenerators (sg), dessen sinusförmiges Ausgangssignal eine dem digitalen Ausgangssignal (d4) des Addierers (ad) proportionale Frequenz besitzt und einen Frequenzteiler (ft) speist, an dessen Ausgang das Horizontalablenksignal (ds) auftritt.

2. Horizontalablenkschaltung nach Anspruch 1 mit einer ersten PLL-Schleife (p1), deren erstes Digitalwort (d1) die Periodendauer des Horizontalablenksignals (ds) repräsentiert, dadurch gekennzeichnet, daß dem ersten Eingang des Addierers (ad) ein digitaler Periodendauer-Frequenz-Wandler (fw) vorgeschaltet ist.

3. Horizontalablenkschaltung nach Anspruch 1 oder 2, dadurch gekennzeichnet, daß zwischen dem Ausgang des Sinusgenerators (sg) und dem Eingang des Frequenzteilers (ft) eine Sicherheitsschaltung (sc), insbes. eine analoge PLL-Schleife, eingefügt ist, die bei Abweichung der Frequenz des Sinusgenerators (sg) von einem Sollbereich ein Sinussignal mit der Sollfrequenz abgibt.

## Claims

1. Digital horizontal-deflection circuit for generating an analog horizontal deflection signal (ds) driving the horizontal output stage (ps) of a digital television receiver clocked by a system clock (st), comprising
   - a first digital phase-locked loop (=PLL) (p1) which synchronizes the horizontal deflection signal (ds) with the horizontal synchronizing signal (hs) separated from the composite color signal, and delivers for each line a first digital word (d1) representative of the horizontal frequency and a second digital word (d2) representative of the desired phase position of the horizontal flyback signal (fy), and
   - a second PLL (p2) which, using a digital phase comparator (pv), generates a third digital word (d3) representative of the phase deviation of the horizontal flyback signal (fy) from the desired position, and shifts the horizontal deflection signal (ds) in time so that the horizontal flyback signal (fy) has the desired phase position, characterized by the following features :
   - The first digital word (d1) is fed to the first input of an adder (ad), and the third digital word (d3) is fed to the second input of said adder (ad) via a multiplier (m) serving as an amplifier, and
   - the output of the adder (ad) is fed to the control input of a digital sine-wave generator (sg) whose sinusoidal output signal has a frequency proportional to that of the digital output signal (d4) of the adder (ad) and feeds a frequency divider (ft) whose output provides the horizontal deflection signal (ds).

2. A horizontal-deflection circuit as claimed in claim 1 and comprising a first PLL (p1) whose first digital word (d1) is representative of the period of the horizontal deflection signal (ds), characterized in that the first input of the adder (ad) is preceded by a digital period-to-frequency converter (fw).

3. A horizontal-deflection circuit as claimed in claim 1 or 2, characterized in that between the output of the sine-wave generator (sg) and the input of the frequency divider (ft), a protection circuit (sc), preferably an analog PLL, is inserted which provides a sine-wave signal of the desired frequency if the frequency of the sine-wave generator (sg) departs from a desired-value range.

**Revendications**

1. Circuit numérique de déviation horizontale dans un récepteur numérique de télévision, commandé de façon cadencée par une cadence système (st), pour la production d'un signal analogique de déviation horizontale (ds), qui commande l'étage final horizontal (ps) de ce récepteur comportant,

    – une première boucle numérique à verrouillage de phase (= boucle PLL) (p1), qui synchronise le signal de déviation horizontale (ds) au moyen du signal de synchronisation horizontale (hs) séparé du signal complet de chrominance, et délivre, pour chaque ligne, un premier mot numérique (d1) représentant la fréquence de lignes et un second mot numérique (d2) représentant la position de consigne du signal de retour horizontal (fy), et

    – une seconde boucle numérique PLL (p2), qui produit, au moyen d'un comparateur de phase numérique (pv), un troisième mot numérique (d3) représentant l'écart de phase du signal de retour horizontal (fy) par rapport à sa position de consigne, et décale dans le temps le signal de déviation horizontale (ds) de manière que le signal de retour horizontal (fy) possède la position de consigne, <u>caractérisé par les caractéristiques suivantes</u>

    – le premier mot numérique (d1) est envoyé à la première entrée d'un additionneur (ad) et le troisième mot numérique (d3) est envoyé, par l'intermédiaire d'un multiplicateur (m) fonctionnant en amplificateur, à la seconde entrée de cet additionneur, et

    – la sortie de l'additionneur (ad) est raccordée à l'entrée de commande d'un générateur numérique (sg) d'un signal sinusoïdal, dont le signal de sortie sinusoïdal possède une fréquence proportionnelle au signal de sortie numérique (d4) de l'additionneur (ad) et alimente un diviseur de fréquence (ft), à la sortie duquel apparaît le signal de déviation horizontale (ds).

2. Circuit de déviation horizontale selon la revendication 1 comportant une première boucle PLL (p1), dont le premier mot numérique (d1) représente la durée de la période du signal de déviation horizontale (ds), caractérisé en ce qu'un convertisseur numérique durée de la période-fréquence (fw) est branché en amont de la première entrée de l'additionneur (ad).

3. Circuit de déviation horizontale selon la revendication 1 ou 2, caractérisé en ce qu'entre la sortie du générateur (sg) du signal sinusoïdal et l'entrée du diviseur de fréquence (ft) est inséré un circuit de sécurité (sc), notamment une boucle PLL analogique, qui délivre un signal sinusoïdal possédant la fréquence de consigne lorsque la fréquence du générateur (sg) du signal sinusoïdal s'écarte d'une gamme de valeurs de consigne.